# EUROPÄISCHE PATENTANMELDUNG

(11) **EP 1 026 419 A2**
(43) Veröffentlichungstag der Anmeldung: **09.08.2000**
(21) Anmeldenummer: 00102309.2
(22) Anmeldetag: 03.02.2000
(51) Int. Cl.: F16D 65/12, B60B 27/00

(54) **Radnabe mit einer Bremsscheibe für eine Scheibenbremse**

(30) Priorität: 06.02.1999 DE 29902180 U
(71) Anmelder: Trenkamp & Gehle GmbH, 49413 Dinklage (DE)
(72) Erfinder: Gehle, Konrad, 49413 Dinklage (DE)
(74) Vertreter: Busse & Busse Patentanwälte

(57) **Zusammenfassung**

Bei einer Radnabe (1) mit einer an dieser mittels einer Befestigungseinrichtung festlegbaren, am Innenumfang mit einem ringförmigen Verbindungsteil versehenen Bremsscheibe (10) für eine Scheibenbremse ist der Verbindungsteil als Klemmverbindungsteil (17) ausgebildet, der zwischen zwei auf der Radnabe (1) angeordneten, eine Ringaufnahme (20) begrenzenden Ringteilen (18,19) der Befestigungseinrichtung festklemmbar ist.

## Beschreibung

Die Erfindung betrifft eine Radnabe mit einer an dieser festlegbaren Bremsscheibe für eine Scheibenbremse nach dem Oberbegriff des Anspruchs 1.

Bei einer bekannten derartigen Radnabe (EP-B-0 636 217), wie sie insbesondere bei Lastkraftwagen und -anhängern Anwendung findet, ist der ringförmige Verbindungsteil der Bremsscheibe von einem an den Innenumfang der Bremsscheibe einseitig angeformten Anflanschring gebildet, der sich koaxial zur Bremsscheibe nach außen erstreckt und mit der Radnabe stirnseitig verschraubt ist. Für die Verschraubung wird hierbei eine Anzahl von auf einem Lochkreis um die Bremsscheibenachse angeordneten, mit dieser achsparallelen Schrauben verwendet, die zur Übertragung des beim Bremsen auftretenden Bremsmoments auf die Radnabe entsprechend groß zu bemessen bzw. in großer Anzahl vorzusehen sind.

Eine solche von Verschraubungen gebildete Befestigungseinrichtung erfordert einen hohen Bearbeitungsaufwand und gestaltet die Montage und Demontage wegen beengter Platzverhältnisse und der Vielzahl der anzubringenden bzw. zu lösenden Schrauben umständlich und zeitaufwendig. Besonders störend ist der hohe Montageaufwand vor allem aus dem Grunde, weil bei jedem verschleißbedingt erforderlich werdenden Auswechseln der Bremsscheibe sämtliche, nach längerem Fahrbetrieb besonders festsitzende, ggf. auch schadhaft gewordene Schraubverbindungen gelöst und nach dem Auswechseln wieder hergestellt werden müssen.

Auch bei einer an sich den Auswechselvorgang erleichternden Zweiteiligkeit der Bremsscheibe, wie sie nach der eingangs genannten EP-B-0 636 217 durch ein Auseinanderbrechen einer zuvor einstückig hergestellten Bremsscheibe in zwei Teile und deren Zusammenfügen an den Bruchflächen erreicht wird, ist der Verbindungsaufwand und speziell der Montageaufwand beim Auswechseln der Bremsscheibe noch dadurch erhöht, daß die beiden Trennzonen der geteilten Bremsscheibe übergreifende Befestigungsvorrichtungen in Form von Schraubverbindungen gelöst und bei der im Austausch eingebauten Bremsscheibe erneut hergestellt werden müssen.

Der Erfindung liegt die Aufgabe zugrunde, den Verbindungsaufwand von Radnabe und Bremsscheibe zu verringern und insbesondere die Montagearbeiten beim Auswechseln einer Bremsscheibe zu vereinfachen.

Ausgehend von einer Radnabe der eingangs angegebenen Art wird diese Aufgabe nach der Erfindung dadurch gelöst, daß der verbindungsteil als Klemmverbindungsteil ausgebildet ist, der zwischen zwei auf der Radnabe angeordneten, eine Ringaufnahme begrenzenden Ringteilen der Befestigungseinrichtung festklemmbar ist. Die Ausbildung eines Klemmverbindungsteils am Innenumfang der Bremsscheibe, diese im wesentlichen lediglich in radialer Richtung entsprechend der Tiefe der Ringaufnahme vergrößernd, läßt sich mit geringem Herstellungsaufwand bei dem üblichen Gießformvorgang der Bremsscheibe durch entsprechende Formgestaltung der Gießform erreichen, ohne daß eine aufwendige weitere mechanische Bearbeitung in einem Ausmaß erforderlich wäre, wie sie mit einer von Verschraubungen gebildeten Befestigungseinrichtung verbunden ist. Die nach der Erfindung vorgesehene Festklemmung des Klemmverbindungsteils zwischen den beiden Ringteilen auf der Radnabe läßt sich ebenfalls mit geringem Aufwand herstellen und wieder lösen. Aus diesem Grunde gestaltet sich auch das Auswechseln einer Bremsscheibe sehr einfach, da nach einem Lösen der Klemmverbindung die Bremsscheibe, bei einer in zwei Scheibenhälften geteilten Ausführung, so mit der Radnabe aus dem Raum zwischen den Bremsbacken der Scheibenbremse heraus verdreht werden kann, daß beide Bremsscheibenhälften nacheinander nach unten von der Radnabe abgenommen werden können, ohne daß es erforderlich ist, zuvor die Radnabe auszubauen. Aber auch bei einer einteiligen Ausführung der Bremsscheibe ist die erfindungsgemäße Klemmverbindung grundsätzlich von Vorteil, da zum Abziehen der Bremsscheibe als Ganzes vom Achskörper, nach einem Ausbau der Radnabe, wiederum lediglich die Klemmverbindung zu lösen ist.

In weiterer Ausgestaltung der Erfindung können die beiden Ringteile der Befestigungseinrichtung als gesonderte Bauteile ausgebildet und unter Klemmeingriff mit dem Klemmverbindungsteil der Bremsscheibe auf der Radnabe festlegbar sein. Dies ermöglicht grundsätzlich eine einfache Anpassung der Ringaufnahme an die Breitenabmessungen der Bremsscheibe, insbesondere, wenn die gesonderten Ringteile der Befestigungseinrichtung als eine vorgebbare Klemmkraft auf den Klemmverbindungsteil der Bremsscheibe ausübende Stellteile ausgebildet sind.

Eine konstruktiv besonders einfache und daher vorteilhafte Ausführungsform der Erfindung sieht statt dessen vor, daß das erste Ringteil als nabenfestes Widerlagerteil und lediglich das zweite Ringteil als Stellteil ausgebildet ist, das bei seiner Verstellung die vorgebbare Klemmkraft auf den Klemmverbindungsteil der Bremsscheibe ausübt.

Zur Vermeidung von Relativverdrehungen der Bremsscheibe gegenüber der Radnabe, insbesondere bei der Übertragung des Bremsmomentes, weist die Ringaufnahme der Radnabe in Umfangsrichtung eine unrund ausgebildete Grundfläche auf, wobei der Klemmverbindungsteil der Bremsscheibe für einen paßgerechten Eingriff in der Ringaufnahme mit seinem Innenumfang entsprechend unrund konturiert ist.

Statt dessen kann zur Vermeidung solcher Relativverdrehungen von Bremsscheibe und Radnabe auch eine Ausgestaltung gewählt werden, bei der die beiden Ringteile und der Klemmverbindungsteil durch stirnseitige Mitnehmer in einem gegenseitigen formschlüssigen Eingriff stehen, wie er z.B. durch einen gegenseitigen Zahneingriff bildende Mitnehmer erreicht werden kann.

Weitere Merkmale und Vorteile der Erfindung ergeben sich aus den Ansprüchen und der nachstehenden Beschreibung in Verbindung mit der Zeichnung, in der mehrere Ausführungsbeispiele des Gegenstands der Erfindung schematisch veranschaulicht sind. In der Zeichnung zeigen:
- Fig. 1: einen Axialschnitt durch eine auf einem Achszapfen drehbar gelagerte Radnabe mit einer auf dieser festgelegten Bremsscheibe für eine Scheibenbremse, nach einem ersten Ausführungsbeispiel der Erfindung,
- Fig. 2: einen Radialschnitt nach der Linie II-II der Fig. 1,
- Fig. 3 und 4: Darstellungen enstprechend Fig. 2, jeweils in Form eines halben Radialschnittes, zur Veranschaulichung zweier weiterer Ausführungsbeispiele des Gegenstands der Erfindung, und
- Fig. 5 bis 9: je ein weiteres Ausführungsbeispiel einer Befestigungseinrichtung zur Festlegung der Bremsscheibe an der Radnabe in auf die Befestigungseinrichtung beschränkten Axialschnitten gemäß Fig. 1.

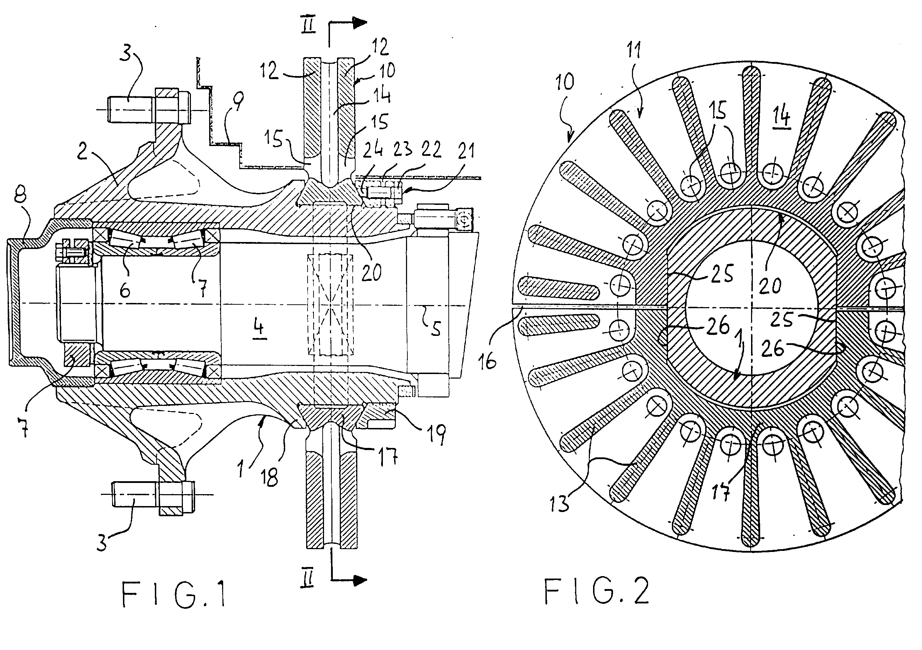

Die Fig. 1 zeigt eine als Ganzes mit 1 bezeichnete einteilige Radnabe, deren sich in radialer Richtung erstreckender Umfangsteil 2 zur Befestigung der Radfelge mittels Radbolzen 3 dient. Die Radnabe 1 ist in Fig. 1 in ihrem auf einem hohlzylindrischen Achszapfen 4 montierten Zustand dargestellt, an den sich innen der eigentliche Achskörper (nicht dargestellt) der Radachse beispielsweise eines LKW-Anhängers anschließt. Die Radnabe 1 ist auf dem Achszapfen 4 mittels einer Wälzlageranordnung in Form zweier in Richtung der Längsachse 5 des Achszapfens 4 mit Abstand voneinander angeordneter Wälzlager 6 und 7 drehbar gelagert.

Am äußeren Ende des Achszapfens 4 ist die Lageranordnung 6, 7 durch eine auf ein äußeres Gewindeende des Achszapfens 4 aufgeschraubte Achsmutter 7 gegen eine Bewegung in axialer Richtung nach außen festgelegt. Den äußeren Abschluß bildet eine Staubkappe 8, die in einen Innengewindeteil der Radnabe 1 eingeschraubt ist.

Bei 9 ist ein Gehäuse einer Scheibenbremse angedeutet, in das eine auf der Radnabe 1 festgelegte, mit der Radnabe 1 umlaufende Bremsscheibe 10 zwischen den im Bremsgehäuse 9 untergebrachten Bremsbacken (nicht dargestellt) der Scheibenbremse eingreift. Die Bremsscheibe 10 kann als massive Bremsscheibe oder, wie bei den dargestellten Beispielen, als innenbelüftete Bremsscheibe ausgeführt sein, bei der ein innerer Belüftungshohlraum 11 zwischen zwei äußeren Scheibenteilen 12 der einstückig durch einen Gießvorgang hergestellten Bremsscheibe 10 gebildet ist. Die beiden Scheibenteile 12 sind durch radiale Verbindungsstege 13, die innerhalb des Außenumfangs der Scheibenteile 12 enden, miteinander verbunden. Zwischen den benachbarten Stegen 13 sind somit jeweils außen offen ausmündende Belüftungsschlitze 14 gebildet, in deren inneren Endbereich axiale Belüftungsöffnungen 15 durch die beiden Scheibenteile 12 einmünden.

Die Bremsscheibe 10 kann, wie oben erwähnt, einstückig gegossen und als solche montiert, oder, vorzugsweise entlang Solibruchlinien, in zwei Ringhälften, wie bei 16 in Fig. 2 angedeutet, gebrochen, im gebrochenen Zustand auf der Radnabe 1 unter Zusammenfügung an den Bruchflächen montiert und in dieser Einbaustellung auf der Radnabe 1 festgelegt werden. Statt dessen ist es auch möglich, die Bremsscheibe 10 sogleich in zwei sich ergänzenden Ringteilen herzustellen und die beiden Ringteile bei dem Montagevorgang wie oben beschrieben, beispielsweise durch eine Nut-Feder-Verbindung, miteinander zu einem stirnseitig glatten Scheibenkörper zu vereinigen.

Die Verbindungsstege 13 gehen an ihrem inneren Ende einstückig in einen ringförmigen Klemmverbindungsteil 17 über, der den Innenumfang der ringförmigen Bremsscheibe 10 bildet. Mittels des Klemmverbindungsteils 17 ist die Bremsscheibe 10 zwischen zwei auf der Radnabe 1 angeordneten Ringteilen 18 und 19 festklemmbar, die als Befestigungseinrichtung eine Ringaufnahme 20 für den Einsatz des Klemmverbindungsteils 17 begrenzen.

Das erste Ringteil 18 ist als nabenfestes Widerlagerteil in Form einer einstückig angeformten Radialschulter der Radnabe 1 und das zweite Ringteil 19 als Stellteil in Form eines Klemmringes ausgebildet, der bei seiner Verstellung eine vorgebbare Klemmkraft auf den zuvor in die Ringaufnahme 20 eingesetzten, vom Widerlagerteil 18 übergriffenen Klemmverbindungsteil 17 ausübt. Der Klemmring 19 ist nach Art einer Schraubmutter mit Innengewinde versehen und wird auf einem Außengewindeabschnitt der Radnabe 1 gegen den Klemmverbindungsteil 17 geschraubt, wie es insbesondere aus Fig. 1 ersichtlich ist.

Zumindest eines der beiden Ringteile 18, 19 ist an seiner die Ringaufnahme 20 begrenzenden Stirnseite mit einer Hinterschneidung versehen, wobei der Klemmverbindungsteil 17 der Bremsscheibe 10 mit zumindest einer der Hinterschneidung entsprechenden, mit dieser in Klemmeingriff bringbaren Keilfläche versehen ist.

Bei dem Ausführungsbeispiel nach Fig. 1 sind beide Ringteile 18, 19 der Befestigungseinrichtung und dementsprechend beide Stirnseiten des Klemmverbindungsteils 17 jeweils mit einer Hinterschneidung versehen, so daß, wie Fig. 1 zeigt, am Klemmverbindungsteil 17 ein Schwalbenschwanzprofil gebildet ist und die Ringaufnahme 20 ein entsprechend konturiertes Schwalbenschwanz-Nutprofil darbietet.

Der Klemmring 19 ist in seiner gegen den Klemmverbindungsteil 17 der Bremsscheibe 10 geschraubten Klemmstellung durch eine Sicherungsvorrichtung 21 arretiert, die von einer Schlitzspannsicherung mit einer Spannschraube 22 gebildet ist, die einen sich quer zur Längsachse des Klemmrings 19 erstreckenden Flächenspalt 23 in Form eines Kreissegments des Klemmrings 19 durchgreift. Hierzu ist der Klemmring 19 mit einer achsparallelen, den Flächen-Spalt 23 durchsetzenden Innengewindebohrung 24 versehen. Beim Einschrauben der Spannschraube 22 erfolgt eine Verspannung durch gegenseitige Verwindung der durch den Flächenspalt 23 geteilten Materialsegmente des Klemmrings 19, die die Klemmstellung des Klemmrings 19 am Klemmverbindungsteil 17 sichert, andererseits aber auch zum Auswechseln der Bremsscheibe 10 ohne weiteres gelöst werden kann, um durch Abschrauben des Klemmrings 19 die Bremsscheibe 10, nachdem auf diese Weise der Klemmeingriff mit der Nabe 1 aufgehoben worden ist, abzunehmen.

Um Verdrehungen der Bremsscheibe 10 gegenüber der Radnabe 1 insbesondere bei der Übertragung eines Bremsmoments auszuschließen, weist die Ringaufnahme 20 der Radnabe 1 in Umfangsrichtung eine unrund ausgebildete Grundfläche auf, während der Klemmverbindungsteil 17 der Bremsscheibe 10 für einen passgerechten Eingriff in der Ringaufnahme 20 mit seinem die Ringöffnung der Bremsscheibe 10 begrenzenden Umfang entsprechend unrund konturiert ist.

Die unrunde Konturierung der Grundfläche der Ringaufnahme 20 und des vom Klemmverbindungsteil 17 gebildeten Innenumfangs der Bremsscheibe 10 geht jeweils aus von einer Kreisform, wobei gemäß dem Ausführungsbeispiel nach Fig. 2 jeweils zwei Abflachungen 25, 26 einander gegenüberliegend in der Grundfläche der Ringaufnahme 20 und am Innenumfang der Bremsscheibe 10 gebildet sind, die in Einbaustellung in gegenseitigem Berührungseingriff stehen und dadurch die Bremsscheibe 10 drehfest auf der Radnabe 1 für einen gemeinsamen Umlauf mit dieser festlegen.

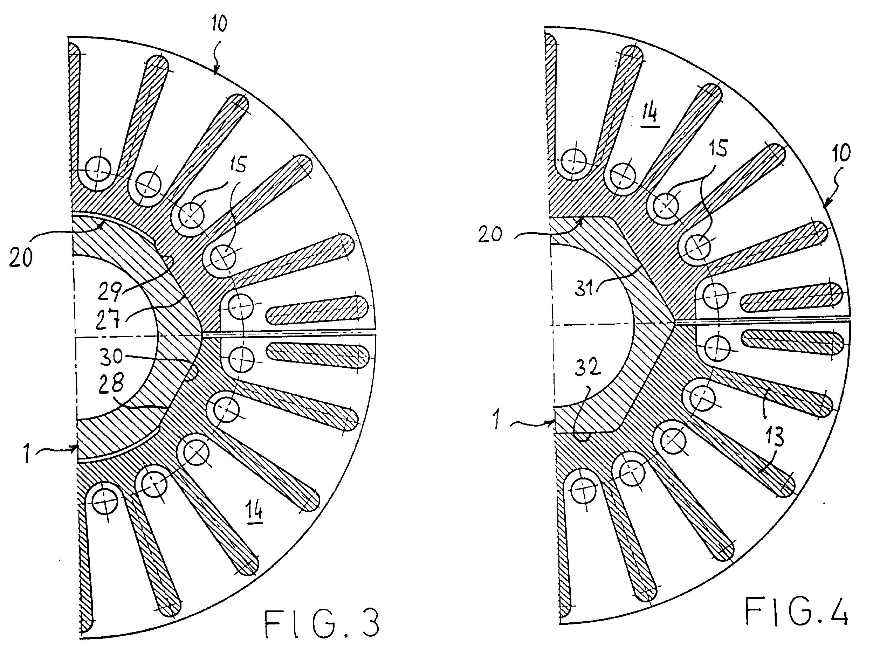

Bei dem Ausführungsbeispiel nach Fig. 3 ist die unrunde Konturierung in der Weise ausgebildet, daß auf jeder Hälfte der Ringaufnahme 20 und des Innenumfangs der Bremsscheibe 10 zwei winklig aneinandergrenzende Abflachungen 27, 28 und 29, 30 einander gegenüberliegen und in Einbaustellung in gegenseitigem Berührungseingriff stehen.

Bei dem Ausführungsbeispiel nach Fig. 4 ist die Grundfläche der Ringaufnahme 20 und der Innenumfang der Bremsscheibe 10 jeweils in der Form eines Polygons 31 bzw. 32, bei dem dargestellten Beispiel in Form eines Sechsecks, ausgeführt. In Einbaustellung greifen beide Polygone 31, 32 ineinander und stellen so die drehfeste Verbindung zwischen der Bremsscheibe 10 und der Radnabe 1 her. Selbstverständlich können auch Polygone mit anderen Seitenzahlen Anwendung finden.

Die in den Fig. 3 und 4 nicht gezeigte Hälfte des Radialschnitts hat eine spiegelsymmetrische Ausbildung zu der jeweils dargestellten Hälfte der Bremsscheibe 10 und der zugehörigen Ringaufnahme 20 der Nabe 1.

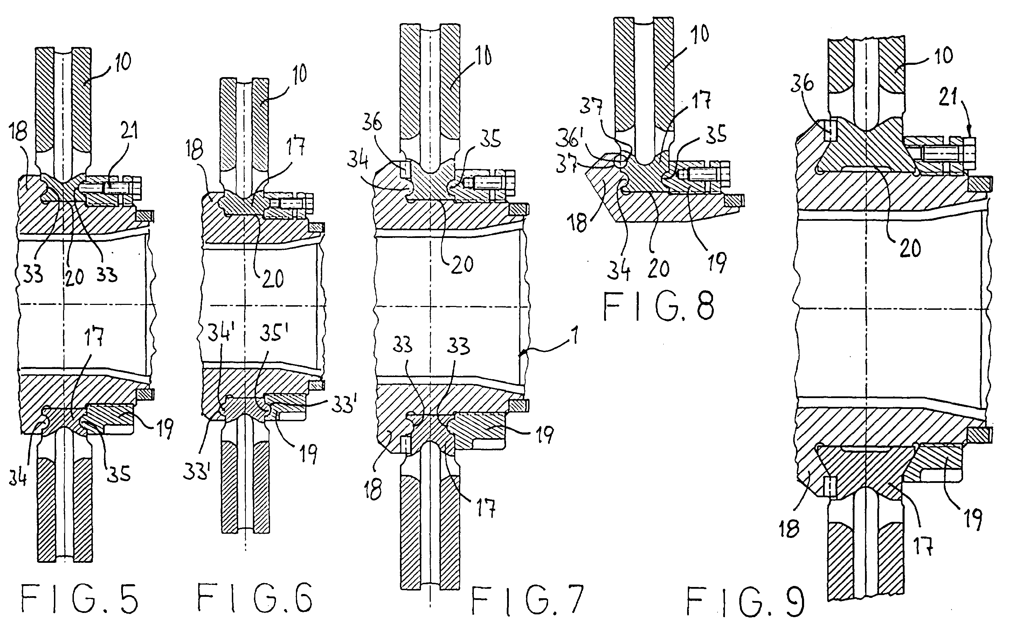

Bei der abgewandelten Ausführungsform der Befestigungseinrichtung für die Bremsscheibe 10 gemäß Fig. 5 ist anstelle des Schwalbenschwanzprofils des Klemmverbindungsteils 17 und des von der Ringaufnahme 20 dargebotenen entsprechenden Schwalbenschwanz-Nutprofils eine umlaufende Nut-Feder-Verbindung vorgesehen, durch die die beiden Ringteile 18, 19 und der Klemmverbindungsteil 17 miteinander in Eingriff stehen. Hierbei ist jeweils eine umlaufende Nut 33 in den beiden Stirnseiten des Klemmverbindungsteils 17 gebildet, während eine komplementäre umlaufende Feder 34, 35 jeweils an der benachbarten, die Ringaufnahme 20 begrenzenden Stirnseite der Ringteile 18 und 19 gebildet ist.

Demgegenüber unterscheidet sich die weitere Abwandlung gemäß Fig. 6 von der Ausführungsform gemäß Fig. 5 lediglich dadurch, daß die Nut- und Federelemente derart vertauscht sind, daß die Nuten 33' in den die Ringaufnahme 20 begrenzenden Stirnseiten der beiden Ringteile 18, 19 und die komplementären umlaufenden Federn 34', 35' in den beiden Stirnseiten des Klemmverbindungsteils 17 gebildet sind.

Während bei den Ausführungsbeispielen nach den Fig. 1 bis 6 die Verdrehsicherung der Bremsscheibe 10 gegenüber der Radnabe 1 durch die unrund ausgebildete Grundfläche der Ringaufnahme 20 und die entsprechende unrunde Konturierung des Innenumfangs der Bremsscheibe 10 gewährleistet ist, ist bei den weiteren Ausführungsbeispielen gemäß den Fig. 7 bis 9 diese Verdrehsicherung dadurch erreicht, daß eines der beiden Ringteile 18, 19, und zwar das nabenfeste Ringteil 18, und der Klemmverbindungsteil 17 durch stirnseitige Mitnehmer 36 in einem gegenseitigen formschlüssigen Eingriff stehen.

Die Mitnehmer 36 sind gemäß Fig. 7 in Form radialer Stege und Nuten im an den Außenumfang angrenzenden Randbereich der Ringaufnahme 20 in der Stirnseite des Ringteils 18 und der benachbarten Stirnseite des Klemmverbindungsteils 17 gebildet und stehen in gegenseitigem Zahneingriff. Hinsichtlich der Nut-Feder-Verbindung entspricht die Ausführungsform nach Fig. 7 derjenigen nach Fig. 5, wie es durch die Verwendung gleicher Bezugszahlen für die insoweit übereinstimmenden Teile kenntlich gemacht ist.

Die Ausführungsform gemäß Fig. 8 unterscheidet sich von derjenigen nach Fig. 7 durch eine andere Ausgestaltung der stirnseitigen Mitnehmer 36' des nabenfesten Ringteils 18 einerseits und des Klemmverbindungsteils 17 andererseits. Gemäß Fig. 8 sind die Mitnehmer 36' von über den Umfang verteilt angeordneten, gesonderten Mitnehmergliedern gebildet, die in einander gegenüberliegende Aufnahmetaschen 37 in dem Ringteil 18 und der gegenüberliegenden Stirnseite des Klemmverbindungsteils 17 jeweils formschlüssig eingreifen. Bei dem in Fig. 8 gezeigten Beispiel sind die Mitnehmerglieder 36' von Kugeln gebildet, die demgemäß in entsprechend hohlkugelig ausgebildete Halbschalen als Aufnahmetaschen 37 eingreifen.

Schließlich veranschaulicht Fig. 9 eine Variante der Befestigungseinrichtung mit einem Schwalbenschwanzprofil des Klemmverbindungsteils 17 und Schwalbenschwanz-Nutprofil der Ringaufnahme 20 gemäß Fig 1, wobei jedoch anstelle der Unrundkonturierung der Grundfläche der Ringaufnahme 20 und des Innenumfangs der Bremsscheibe 10 als deren Verdrehsicherung gegenüber der Radnabe 1 ein gegenseitiger formschlüssiger Eingriff durch das Vorsehen der Mitnehmer 36 an der Stirnseite des nabenfesten Ringteils 18 und der gegenüberliegenden Stirnseite des Klemmverbindungsteils 17 erreicht ist.

## Patentansprüche

1. Radnabe mit einer an dieser mittels einer Befestigungseinrichtung festlegbaren, am Innenumfang mit einem ringförmigen Verbindungsteil versehenen Bremsscheibe für eine Scheibenbremse, **dadurch gekennzeichnet**, daß der Verbindungsteil als Klemmverbindungsteil (17) ausgebildet ist, der zwischen zwei auf der Radnabe (1) angeordneten, eine Ringaufnahme (20) begrenzenden Ringteilen (18,19) der Befestigungseinrichtung festklemmbar ist.

2. Radnabe nach Anspruch 1, dadurch gekennzeichnet, daß beide Ringteile (18,19) der Befestigungseinrichtung als gesonderte Bauteile ausgebildet und unter Klemmeingriff mit dem Klemmverbindungsteil (17) der Bremsscheibe (10) auf der Radnabe (1) festlegbar sind.

3. Radnabe nach Anspruch 1 oder 2, dadurch gekennzeichnet, daß das erste Ringteil (18) als nabenfestes Widerlagerteil und das zweite Ringteil (19) als Stellteil ausgebildet ist, das bei Verstellung eine vorgebbare Klemmkraft auf den Klemmverbindungsteil (17) der Bremsscheibe (10) ausübt.

4. Radnabe nach Anspruch 1 oder 2, dadurch gekennzeichnet, daß beide Ringteile (18,19) der Befestigungseinrichtung als Stellteile ausgebildet sind.

5. Radnabe nach Anspruch 3, dadurch gekennzeichnet, daß das nabenfeste Widerlagerteil von einer Radialschulter der Radnabe (1) und das Stellteil von einem gegen den Klemmverbidungsteil (17) der Bremsscheibe (10) schraubbaren Klemmring gebildet ist.

6. Radnabe nach einem der Ansprüche 1 bis 5, dadurch gekennzeichnet, daß zumindest eines der beiden Ringteile (18,19) der Befestigungseinrichtung an seiner die Ringaufnahme (20) begrenzenden Stirnseite mit einer Hinterschneidung und der Klemmverbindungsteil (17) der Bremsscheibe (10) mit zumindest einer der Hinterschneidung entsprechenden, mit dieser in Klemmeingriff bringbaren Keilfläche versehen ist.

7. Radnabe nach einem der Ansprüche 1 bis 6, dadurch gekennzeichnet, daß der Klemmverbindungsteil (17) der Bremsscheibe (10) ein Schwalbenschwanzprofil aufweist und die Ringaufnahme (20) der Befestigungseinrichtung ein entsprechend konturiertes Schwalbenschwanz-Nutprofil darbietet.

8. Radnabe nach einem der Ansprüche 1 bis 6, dadurch gekennzeichnet, daß die beiden Ringteile (18,19) und der Klemmverbindungsteil (17) durch eine umlaufende Nut-Feder-Verbindung miteinander in Eingriff stehen.

9. Radnabe nach einem der Ansprüche 1 bis 8, dadurch gekennzeichnet, daß eines (18) der beiden Ringteile (18,19) und der Klemmverbindungsteil (17) durch stirnseitige Mitnehmer (36;36') in gegenseitigem Eingriff stehen.

10. Radnabe nach Anspruch 9, dadurch gekennzeichnet, daß die Mitnehmer (36) einen gegenseitigen Zahneingriff bilden.

11. Radnabe nach Anspruch 9, dadurch gekennzeichnet, daß die Mitnehmer (36') von über den Umfang verteilt angeordneten, gesonderten Mitnehmergliedern gebildet sind, die in einander gegenüberliegende Aufnahmetaschen (37) in dem Ringteil (18) und dem Klemmverbindungsteil (17) jeweils formschlüssig eingreifen.

12. Radnabe nach einem der Ansprüche 1 bis 8, dadurch gekennzeichnet, daß die Ringaufnahme (20) der Radnabe (1) in Umfangsrichtung eine unrund ausgebildete Grundfläche aufweist und der Klemmverbindungsteil (17) der Bremsscheibe (10) für einen paßgerechten Eingriff in der Ringaufnahme (20) mit seinem Innenumfang entsprechend unrund konturiert ist.

13. Radnabe nach Anspruch 12, dadurch gekennzeichnet, daß die Grundfläche der Ringaufnahme (20) und der vom Klemmverbindungsteil (17) gebildete Innenumfang der Bremsscheibe (10), ausgehend von einer Kreisform, jeweils mit zumindest zwei in Einbaustellung in gegenseitigem Berührungseingriff stehenden Abflachungen (25,26; 27,28,29,30) versehen sind.

14. Radnabe nach Anspruch 12 oder 13, dadurch gekennzeichnet, daß die Grundfläche der Ringaufnahme (20) und der Innenumfang der Bremsscheibe (10) die Form ineinandergreifender Polygone (31,32) aufweisen.

15. Radnabe nach einem der Ansprüche 5 bis 14, dadurch gekennzeichnet, daß der Klemmring in seiner gegen den Klemmverbindungsteil der Bremsscheibe (10) geschraubten Klemmstellung durch eine Sicherungsvorrichtung (21) arretiert ist.

16. Radnabe nach Anspruch 15, dadurch gekennzeichnet, daß die Sicherungsvorrichtung (21) von einer Schlitzspannsicherung mit einer einen sich quer zur Ringachse erstreckenden Flächenspalt (24) des Klemmrings durchgreifenden Spannschraube (22) gebildet ist.

17. Radnabe nach Anspruch 16, dadurch gekennzeichnet, daß der Flächenspalt (24) ein Kreissegment des Klemmrings einnimmt.
